# EUROPEAN PATENT SPECIFICATION

(11) **EP 4 378 588 B1**
(45) Date of publication and mention of the grant of the patent: **30.10.2024**
(21) Application number: 23213016.1
(22) Date of filing: 29.11.2023
(51) Int. Cl.: B01L 9/06, G01N 35/04

(54) **LOADING AND UNLOADING UNIT FOR SAMPLE RACKS**
BE- UND ENTLADEEINHEIT FÜR PROBENREGALE
UNITÉ DE CHARGEMENT ET DE DÉCHARGEMENT POUR PORTOIRS D'ÉCHANTILLONS

(30) Priority: 29.11.2022 US 202263428632 P; 30.11.2022 LU 103047
(43) Date of publication of application: 05.06.2024
(73) Proprietor: Stratec SE, 75217 Birkenfeld (DE); Instrumentation Laboratory, Bedford, MA 01730 (US)
(72) Inventor: Lowien, Thomas, 75217 Birkenfeld (DE); Ahr, Daniel, 75217 Birkenfeld (DE); Newton, Benjamin, Bedford, 01730 (US); Nachtigal, Daniel, Bedford, 01730 (US); Gomez Martinez de Lecea, Alberto, Bedford, 01730 (US); Almy Jr., Christopher, Bedford, 01730 (US)
(74) Representative: Tegethoff, Sebastian

(56) References cited:
- EP-A1- 2 357 481
- EP-A1- 2 620 776
- EP-A1- 3 940 387
- JP-A- H10 123 146
- LU-B1- 103 047

## Description

### Field of the Disclosure

The disclosure relates to a tray, a system comprising the tray and methods of loading and unloading units for sample racks.

### Brief description of the related art

A number of companies produce automated analyzer systems for use in clinical diagnostics and life sciences. Such systems are used to analyze patient samples comprising biochemical liquids, for instance. The samples are handled in so-called sample tubes or containers, which in turn are placed into racks for their handling. For simplicity, tubes are used in the following description. However, any type of container suitable for holding a sample, e.g., for sample transfer, preparation, storage, or testing, can be used in connection with the methods and systems of the present disclosure.

Tube racks belong to laboratory equipment, and they are used to hold multiple containers like tubes upright at the same time. They are used for safe storage of the tubes and to ease the transport of multiple tubes. Tube racks also ease the organization of the tubes and provide support for the tubes being worked with.

Tube racks are known in different sizes, compositions, materials, and colors. The racks for tubes are often made of metal wires, but they can also be made of plastic, polystyrene, foam, fiberglass, and polypropylene. Tube racks come in the form of a classic rack, an interlocking cubical form, a stackable form, a tube drying rack, a slant rack, and a 1-well rack.

Tube racks will often have to be loaded or unloaded into automated analyzer systems through specific devices or units of such systems allowing for a safe application of the racks to the system. In high throughput systems, many racks are to be handled, but the handling will also have to be done continuously.

Tubes for loading to a system are usually placed in a rack apart from the automated analyzer system and will be loaded following the completion of a rack. For transporting the racks to the automated analyzer system or a connected device for loading racks, they are often placed onto a tray or into a carriage. After loading the trays to the automated analyzer system or a connected device for loading racks, they are moved on a conveyer belt, by grippers, or other means configured for moving racks.

Disadvantages of the known system for handling racks in labs relate to the risk of contamination of samples due to manual handling of the racks containing sample tubes. Using a gripper for automated handling of racks bears the risk of a collision while moving a rack. Moreover, multiple and frequent manual and/or automatic interactions with sample tubes during their loading process introduce a risk of disruption to sample integrity - the delicate separation between red blood cells and blood plasma necessary in many blood tests.

Further, a tray attached to the front of the device for loading racks increases the distance between the user and the loading device. For small persons, pushing over can be cumbersome. A gripper or pushing lever can be used to transport/ push the racks into the analyzer. From a safety point of view, this solution has disadvantages compared to a conveyor belt. If the racks move against a stop (e.g., the users' hand), the lever still pushes forward, and the user can thus be trapped between the racks or by the lever itself. The disadvantage of this solution is that the position and orientation of the lever/gripper must always be included in the loading scenario. The lever must be in a position in which loading of the racks is possible.

Published European patent application EP 2 357 481 A1 discloses a rack transport system that horizontally slides a rack tray holding and storing a plurality of specimen containers, allowing the rack tray to be safely placed on a rack tray set section. For this purpose, a rack transport system using a rack tray having a rack dropout-preventing mechanism includes a rack tray set section that has a lock canceling mechanism of the rack dropout-preventing mechanism and on which the rack tray that arranges and holds a plurality of racks supporting a plurality of specimen containers is placed, and a projection section serving as a lock canceling button of the rack dropout-preventing mechanism is formed at a position where the rack tray that holds and stores the plurality of racks supporting the plurality of specimen containers is slid to be able to be set in the rack tray set section.

Published Japanese patent Application JP H10 123146 A discloses a blood-sampling tube for accommodating blood or urine which is mounted to a rack , the rack is moved horizontally from a track for mounting, and the falling-off from the opening of the tray is prevented by a stopper. A coil spring is passed through an operation rotary shaft of the stopper of the tray before installation, the falling-off of the stopper is constantly prevented by the force, and a cover is provided to prevent the stopper from being released easily from the outside. To release the stopper, a pin is provided at a tray installation part and the tray is placed, thus rotating the stopper around the rotary shaft and releasing the falling-off prevention mechanism. As a result, the faling-off of the tray can be prevented as far as the stopper is released by the pin, so that blood and urine ni the blood-sampling tube can be protected.

Published European Patent application EP 2 620 776 A1 discloses a sample rack handling unit comprising a rack onload section comprising an onload rail, which enables a sideway engagement with a rack from a rack onload edge and a sideway disengagement by sliding the rack on an inclined onload rail side in the direction of the rack onload edge. In this way, it is possible to load a rack or a plurality of racks at any position along the transportation path in the rack onload section, as well as to change the position of one or more racks or to remove one or more racks from any position, if e.g. it is desired to replace a rack with another rack. At the same time, it is ensured that the racks can be smoothly transported longitudinally along the rail. Moreover, the shape and arrangement of the rail allows an easy and ergonomic handling of the racks for a smooth and quick manual or automated operation both when engaging and when disengaging a rack.

Thus, there is a need for a system allowing to safely and directly apply many racks to a system.

### Summary of the Disclosure

The present disclosure provides a tray for loading and unloading of samples to a system, wherein the tray comprises a base plate comprising on its upper surface a longitudinal extending guiding rail which is arranged closer to one of the two longitudinal sides of the tray, wherein the tray comprises at least one element that is configured to extend through an opening in the upper surface of the base plate, when the tray is lifted from a surface.

An object of the present invention relates to a system, comprising a tray for loading and unloading of samples to a system, wherein the tray comprises a base plate comprising on its upper surface a longitudinal extending guiding rail which is arranged closer to one of the two longitudinal sides of the tray, wherein the tray comprises at least one element that is configured to extend through an opening in the upper surface of the base plate, when the tray is lifted from a surface; and at least one rack comprising on its lower surface an acceptance slot configured for accommodating a guiding rail of the tray; and a loading area comprising two toothed conveyer belts arranged in a distance corresponding to the trays width.

The system according to the present invention may comprise a guiding rail and acceptance slot which comprise an end which is broader than its connecting part to a lower side of the rack for the acceptance slot or to the upper surface of the base plate for the guiding rail.

The system according to the present invention may comprise toothed belts that are arranged in a height so that a gap is present between the at least one rack and the upper surface of the tray's base plate.

The system may also comprise a loading area comprising a counterpart on its upper surface for retracting the at least one element.

The system may comprise in an embodiment an element that is configured to retract when the tray is placed onto a surface.

The element of a tray of a system according to the present invention can be a rocker which is located below the upper surface of the base plate and is connected through an axis of rotation to the tray wherein the rocker comprises on one end a latch; or a spring loaded pin.

The present invention relates also to system with a tray as described above, comprising at least two elements, wherein the at least two elements are arranged in a distance corresponding to a predefined length of a stack of racks.

It is also envisaged that the rocker is spring loaded or the rocker's end opposite the end with the latch comprises a weight.

In a further embodiment of a tray of a system according to the present invention, the rocker's end opposite the end with the latch comprises a stop which is a perpendicular extending elongation of the rocker.

The tray of a system may also comprise in an embodiment two differently formed rockers.

In a further aspect, the tray of a system according to the present invention may comprise a C-shaped handle.

Another embodiment relates to a system with a tray, wherein the guiding rail comprises an end which is broader than the connecting part to the base plate. The guiding rail can be T-shaped.

Still other aspects, features, and advantages of the present invention are readily apparent from the following detailed description, simply by illustrating preferable embodiments and implementations. The present invention is also capable of other and different embodiments and its several details can be modified in various obvious respects, all without departing from the scope of the present invention as defined by the appended claims. Accordingly, the drawings and descriptions are to be regarded as illustrative in nature, and not as restrictive. Additional objects and advantages of the invention will be set forth in part in the description which follows and in part will be obvious from the description, or may be learned by practice of the invention without departing from the scope of the claims.

### Summary of the Figures

The invention will be described based on figures. It will be understood that the embodiments and aspects of the invention described in the figures are only examples and do not limit the protective scope of the claims in any way. The invention is defined by the claims
FIG. 1 shows a system according to the invention comprising a tray and a rack onto the tray.
FIG. 2 shows schematically an embodiment of a latch when the tray is above a surface (left part), or the tray is placed onto a surface (right part).
FIG. 3 shows schematically an embodiment of a latch with a stop when the tray is above a surface (left part), or the tray is placed onto a surface (right part).
FIG. 4 shows schematically an embodiment of a latch with weight when the tray is above a surface (left part), or the tray is placed onto a surface (right part).
FIG. 5 shows schematically an embodiment with identical latches on both sides.
FIG. 6 shows schematically an embodiment with differently configured latches on both sides.
FIG. 7 shows the latches during the loading of a tray.
FIG. 8 shows an embodiment with a C-shaped handle of a tray.
FIG. 9 shows a system according to the present invention, which is placed into a loading area of an automated analyzer system.
FIG. 10 shows that racks protrude above the tray's base plate so that they can rest on belts of the loading area.
FIG. 11 a loading area that is intended for inserting trays (not shown) into the device and removing them again.
FIG. 12 shows a loading area comprising a counterpart for retracting latches.
FIG. 13 shows a loading area configured for the unloading of trays.
FIG. 14 shows a perspective view into the loading area and storage area with an empty tray that is inserted into the loading area.

### Detailed Description of the Disclosure and the Figures

The technical problem is solved by the independent claims. The dependent claims cover further specific embodiments of the invention.

The term tube refers within the present disclosure to a container that provides cavities, receptacles, or recesses for receiving a fluid which can be a liquid like a patient sample for instance. The term fluid refers to a liquid or gas which both may comprise solids like magnetic particles. A sample may be any biochemical liquid like whole blood, plasma, urine, lymph, or saliva.

The present invention provides a system suitable for directly placing prepared racks comprising tubes from a tray to a conveyor belt in a device for loading racks or directly to an automated analyzer system. A manual insertion of individual racks is thus no longer necessary. The racks are automatically conveyed into the device or the automated analyzer system, respectively, and will be automatically transferred back onto the tray after the analysis is completed. The user only needs to load and unload the trays into the device or the automated analyzer system. The racks or sample tubes themselves will not have to be moved manually by the user.

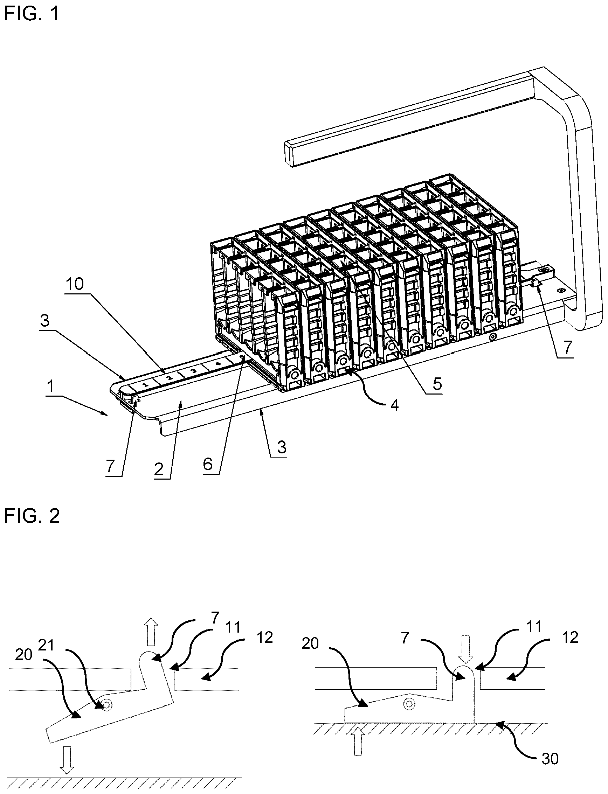

A first aspect of a system according to the present invention relates to a tray 1 which is part of a system shown in FIG. 1. According to the present disclosure, the system comprises a tray 1 and a rack 5 for placing it onto the tray 1. Racks 5 are placed sidewise on the upper surface of a base plate 2 of tray 1. A guiding rail 10 is arranged onto the upper surface of the tray's base plate 2.

The guiding rail 10 is located asymmetrically on base plate 2 of tray 1 within the meaning that the guiding rail 10 has a small distance to one longitudinal extending side 3. Racks 5 may provide an acceptance slot 6 which is also arranged with a smaller distance to one of its narrow sides 4 so that the racks 5 or stacks of racks 5 can only be placed in a single, predetermined orientation onto tray 1, thereby ensuring a correct rack orientation.

The shape and fit between guiding rail 10 and rack acceptance slot 6 are configured for ensuring that the racks 5 cannot vibrate excessively during their transport on the tray 1. An example for such a configuration is a T-shaped guiding rail 10 and a acceptance slot 6 having a corresponding shape. It is obvious for a person having ordinary skill in the art that an appropriate shape for guiding rail 10 and acceptance slot 6 comprises an end of the respective structure which is broader than the connecting part of the structure to the base plate in case of the guiding rail 10 and into the body of the tray in case of the acceptance slot 6.

Additionally, elements like latches 7 at both sides of tray 1 can ensure that the racks 5 cannot fall off the tray 1 when it is carried. When loading racks 5 onto tray 1, latches 7 are retracted, allowing the rack 5 or stacks of racks 5 to slide onto the guiding rail 10 and thus onto the upper surface of base plate 2 of tray 1. When the tray 1 is lifted, the elements which can be latches 7 as shown in FIG. 1 extend for fixation of the stack of racks 5 so that a safe transport of the stack of racks 5 is ensured.

FIG. 2 shows schematically an embodiment of a latch 7 when the tray 1 is above a surface 30 (left part) or the tray 1 is placed onto a surface 30 (right part) which can be the upper surface 30 of base plate 2 of tray 1. Latch 7 comprises a rocker 20 (comp. FIG. 2). The rocker 20 moves around axis 21, through which the rocker 20 is connected to the tray 1. The rocker 20 is preloaded by spring force or gravity. The latches 7 extend by spring force or gravity. They retract by a contact of the end of a rocker 20 opposite the end with a latch 7 with a surface 30 pushing the end of rocker 20 so that latches 7 move into an opening 11 in base plate 2 of tray 1 (not shown in FIG. 2). The arrows in FIG. 2 indicate the direction of the movements of the rocker's ends.

In a so-called idle state, the spring (not shown in detail) is preloaded and the latch 7 is extended with one end above the surface of the base plate 2 (comp. FIG. 2, left). The latch 7 is actuated when the tray is placed onto a surface 30. When the tray is set down, its own weight exerts sufficient pressure on rocker 20 so that the latch 7 retracts into opening 11 of base plate 2 of tray 1 (comp. FIG. 2, right).

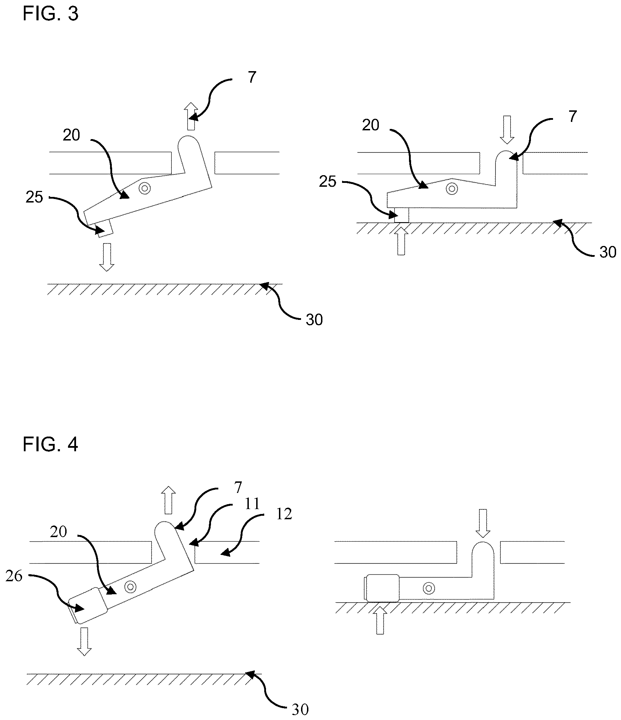

FIG. 3 shows schematically an embodiment of a latch 7 with a stop 25 when the tray 1 is above a surface 30 (left part) or the tray 1 is placed onto a surface 30 (right part). To adapt the rockers "switching behavior", its length and/or geometry can be changed, e.g., by mounting a stop 25 to the rocker's end opposite the end with latch 7 so that the latch 7 is actuated via the stop 25 touching surface 30 when the tray 1 is placed onto a surface 30. It can be taken from FIG. 3 that the stop 25 is a perpendicular extending elongation from the rocker's end. The length of the elongation can be adapted to the required switching behavior of the rocker.

FIG. 4 shows schematically an embodiment of a latch 7 with a weight 26 when the tray 1 is above a surface 30 (left part) or the tray 1 is placed onto a surface 30 (right part). Alternatively, a weight 26 can be used instead of a preloaded spring to keep the latch 7 extended via rocker 20. In this mode of operation, there is a weight 26 located on the rocker's end opposite the end, comprising a latch 7. When the tray is placed onto a surface 30, its own weight activates rocker 20 so that the latch 7 retracts. In addition, a stop 25 can be attached as shown in FIG. 3. The arrows in FIG. 3 and FIG. 4 indicate the direction of movements. The mass of the weight can be adapted to the required switching behavior of the rocker.

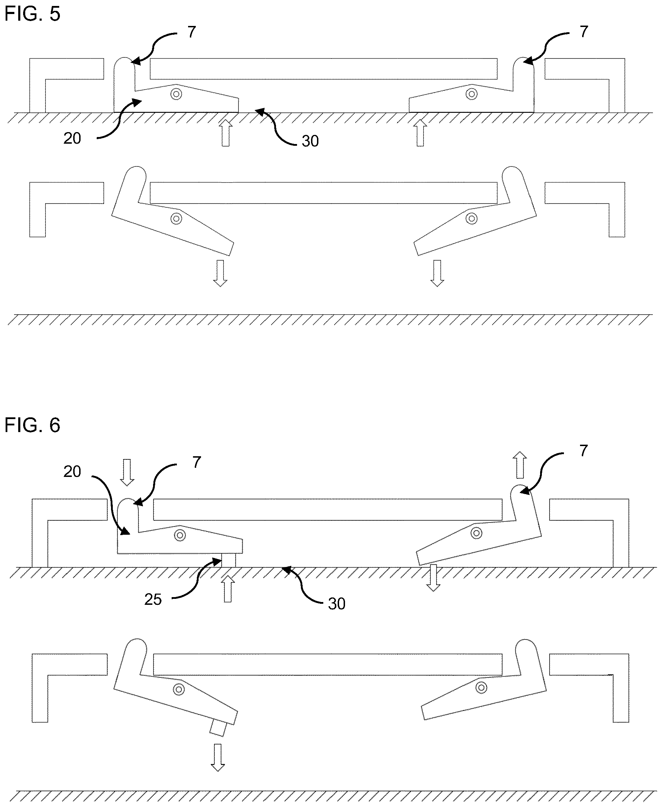

FIG. 5 shows schematically an embodiment with identical latches 7 on both sides so that both latches retract or extend to facilitate the positioning of the racks.

FIG. 6 shows schematically an embodiment with differently formmed rockers 20 on both sides wherein one latch 7 is already retracted while the other latch 7 remains extended. FIG. 6 shows an example of such an embodiment with a rocker 20 with latch 7 including a stop 25 (left) and a latch 7 without a stop (right). The right latch 7 remains extended and may serve as a mechanical stop when loading racks (not shown) onto a tray (not shown). When the tray is lifted, both latches extend, ensuring safe transport of the racks (comp. FIG. 6, lower part). In this configuration, the racks can only be loaded from the left side. The arrows in FIG. 6 indicate the direction of movements.

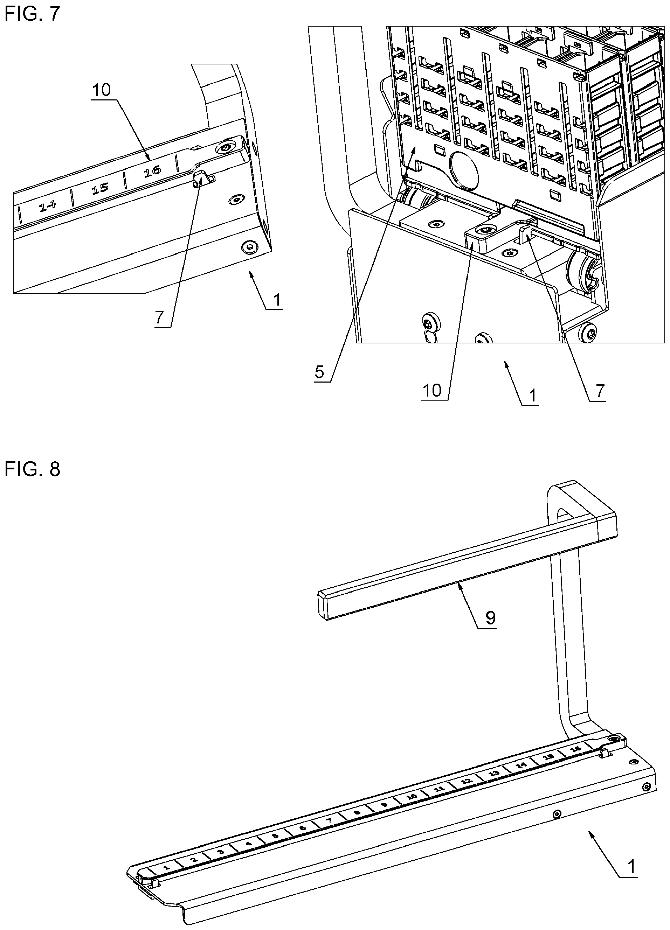

FIG. 7 shows the latches 7 during loading of a tray 1. During loading, the racks 5 are guided onto the guiding rails 10 of the tray 1 passing the retracted latch (not shown) and the first rack 5 will stop at the extended latch 7 which serves as a stop for all racks 5 which may be arranged side by side.

An alternative to a latch as described is a spring loaded pin which when the tray is placed onto a surface and which extends through an opening in the base plate's upper surface when the tray is lifted.

FIG. 8 shows an embodiment of a tray 1 with a C-shaped handle 9 which allows reloading of racks 5 by a user into the loading bay/system via the front of tray 1 at any time. The handle allows a user to grip the tray for moving it. It is obvious for a person having ordinary skill in the art that the shape of the handle is not limited to the shown C-shape and that a closed handle may also be intended.

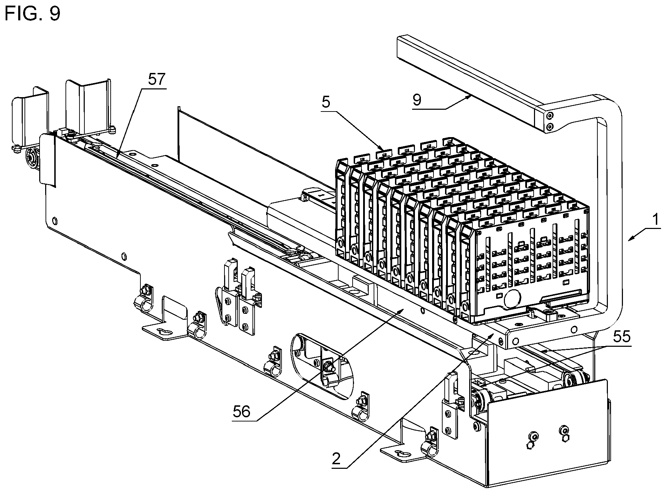

FIG. 9 shows a system according to the present invention which is placed into a loading area 56 of an automated analyzer system. The loaded tray 1 is placed into a loading area 56 by a user. Base plate 2 of tray 1 fits exactly between two toothed belts/conveyor belts 55. After tray 1 has been inserted, racks 5 will be moved to a storage area 57. The tray 1 can be removed via handle 9 and a further loaded tray (not shown) may be used to load further racks 5.

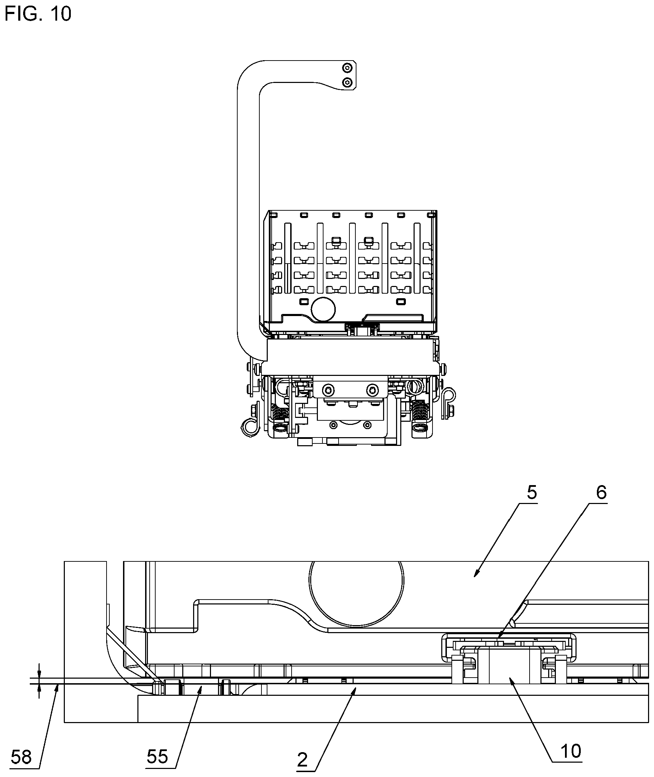

FIG. 10 shows that racks 5 protrude above the tray's base plate 2 so that they can rest on belts 55 of the loading area. These toothed belts are arranged higher than the tray's base plate 2, which means that there is a gap 58 between a rack 5 and the tray's base plate 2. There is enough space between rack 5 and the guiding rail 10 of the tray so that they can be easily pulled out of the rack's acceptance 6.

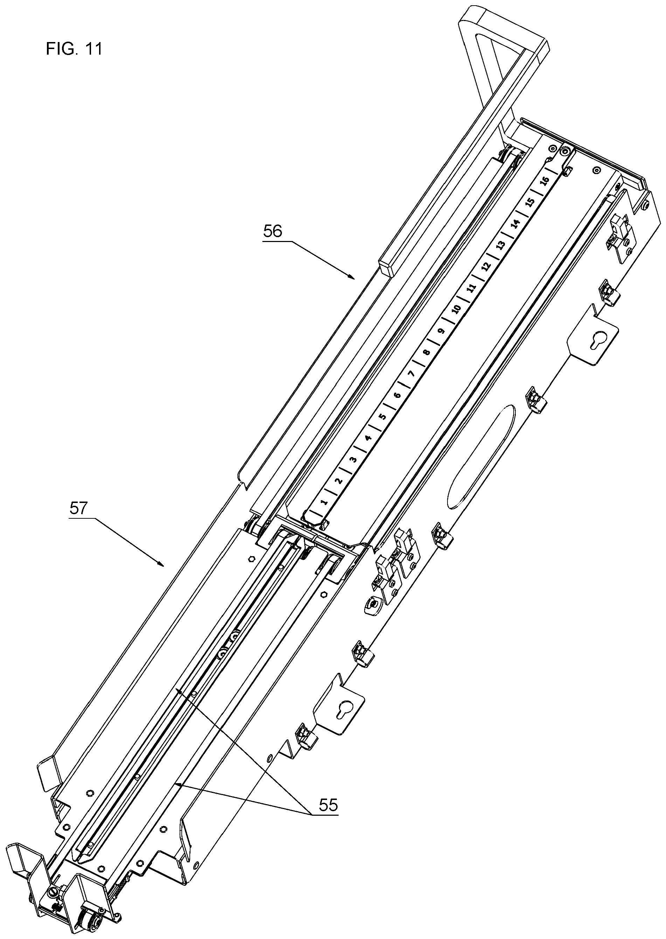

As already mentioned, there are two areas in the device for loading racks. FIG. 11 shows a loading area 56 which is intended for inserting trays (not shown) into the device and removing them again. This area is accessible to the user. Storage area 57 comprises independent running belts 55. This area comprises racks which have already been loaded for their storage and for their provision to the analyzer for further processing. The user has no access to storage area 57.

The racks in the loading area of the tray can be transported independently from the racks in the storage area of the device and thus a continuous loading and unloading are possible. Thus, the racks can be transported forwards or backwards by the conveyor belt, as needed. The empty tray can be removed and a new one loaded, when all racks have been transported or unloaded from the tray.

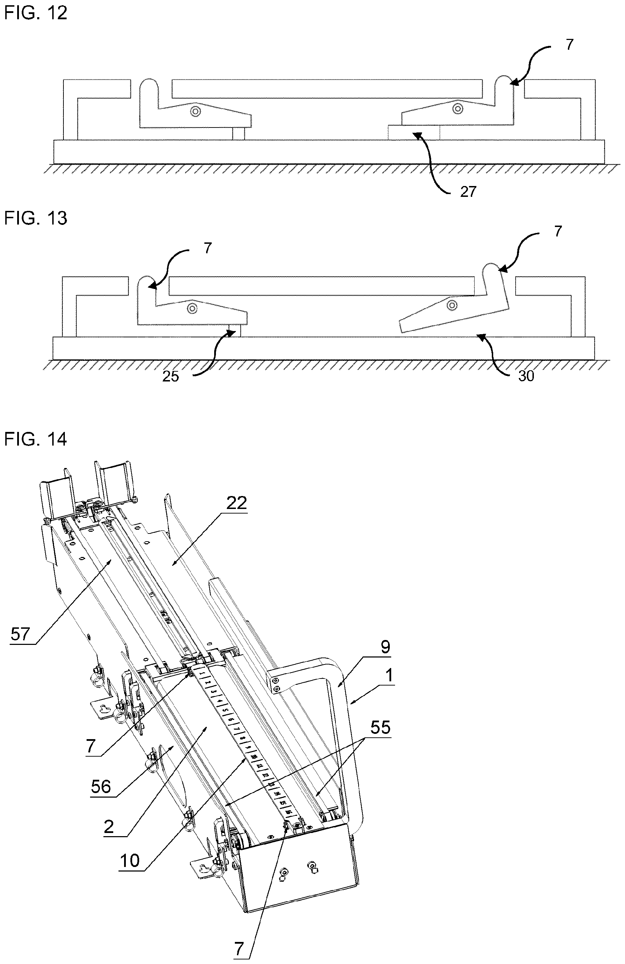

FIG. 12 shows a loading area comprising a counterpart 27 for retracting latches 7. The loading area is configured in a manner that at least the latch unlocks, which is located between loading and storage area. If required, the loading area can be designed with a corresponding counterpart 27 getting in contact with the end of a latch 7 so that at least one or all latches retract when the tray is inserted. During transport to the storage area using a conveyor belt, the racks can be transported through retracted latches.

FIG. 13 shows a loading area configured for the unloading of trays (not shown). When the analysis of samples is finished, the racks can be unloaded again. In this case, it will be useful to configure the loading area in a manner that only the latch 7 between the loading and storage area is unlocked (FIG. 13, left latch). The latch 7 in direction towards the user is locked (FIG. 13, right latch) so that it serves as a stop for racks (not shown) and the racks cannot fall off a tray. In FIG. 13, the left latch towards the storage area has a stop 25 arranged at the end opposite the end with latch 7. Alternatively, a latch with a longer rocker may be used or an additional counterpart (not shown) can be attached to a surface 30 in the loading area. A design using gravity is also possible (comp. FIG. 13).

FIG. 14 shows a perspective view into loading area 56 and storage area 57 with an empty tray 1 which is inserted into loading area 56. Tray 1 fits exactly between the conveyer belts 55 in loading area 56. The asymmetrically on base plate 2 arranged guiding rail 10 with extended latches 7 is shown. Base plate 2 of inserted tray 1 is on the same level as base plate 22 of storage area 57. The guiding rail 10 extends in storage area 57 so that tipping of racks (not shown) is prevented. Tray 1 may have in an embodiment a C-shaped handle 9 so that a user can remove the tray 1 by gripping it by the C-shaped handle 9. An alternative to a C-shaped handle is for instance a closed handle.

For unloading of racks, the conveyor belts in the storage area move the racks from the storage area to the loading area onto an empty tray which can be removed. After racks from a loaded tray have been moved from the loading area to the storage area, the user can remove the empty tray and place a new tray in the loading area.

The present disclosure also encompasses a method for loading and unloading of racks from or to a device employing the tray, respectively the system as described above.

The advantages of the invention can be summarized as follows:
- The tray allows a safe and balanced transport of multiple loaded racks;
- The guiding rail, which engages with the bottom side of the racks through an acceptance slot ensures the orientation of the rack in a correct position and prevents the racks from tipping or falling off the tray;
- In inserted state of a tray into the loading area of the device, racks can still be reloaded individually via the front of the tray.
- Latches on the tray's base plate prevent rack from slipping off the tray during transport.
- Two belts in the loading and storage allow continuous transport of racks during loading and unloading of rack on trays or allow individually loading racks via the front of the tray;
- The belt drive does not present any safety risks to the user, minimizing the risk of pinching;
- the asymmetrical arrangement of the guiding rail allows only loading and unloading of trays in a correct orientation.

The foregoing description of the preferred embodiment of the invention has been presented for purposes of illustration and description. It is not intended to be exhaustive or to limit the invention to the precise form disclosed, and modifications and variations are possible in light of the above teachings or may be acquired from practice of the invention without departing from the scope of the claims. The embodiment was chosen and described in order to explain the principles of the invention and its practical application to enable one skilled in the art to utilize the invention in various embodiments as are suited to the particular use contemplated. The scope of the invention is defined by the claims appended hereto.

### Reference Numerals

- 1: tray
- 2: base plate
- 3: longitudina extending side surface tray
- 4: narrow side rack
- 5: rack
- 6: acceptance slot
- 7: latch
- 9: handle
- 10: guiding rail
- 11: opening
- 12: housing
- 20: rocker
- 21: axis
- 22: base plate storage area
- 25: stop
- 26: weight
- 27: counterpart
- 30: surface
- 55: conveyer belt
- 56: loading area
- 57: storage area
- 58: gap

## Claims

1. A system, comprising
- a tray : (1) for loading and unloading of samples to a system, wherein the tray (1) comprises a base plate (2) comprising on its upper surface a longitudinal extending guiding rail (10) which is arranged closer to one of the two longitudinal sides (3) of the tray, wherein the tray (1) comprises at least one element (7,20) that is configured to extend through an opening (11) in the upper surface of the base plate, when the tray is lifted from a surface (30); and
- at least one rack (5) comprising on its lower surface an acceptance slot (6) configured for accommodating the guiding rail (10) of the tray; and
- a loading area (56) comprising two toothed conveyer belts (55) arranged in a distance corresponding to the trays width.

2. The system of claim 1, wherein guiding rail (10) and acceptance slot (6) comprise an end which is broader than its connecting part to a lower side of the rack (5) for the acceptance slot (6) or to the upper surface of the base plate for the guiding rail (10)

3. The system of claim 1 or 2, wherein the toothed belts ; (55) are arranged in a height that a gap (58) is present between the at least one rack (5) and the upper surface of the tray's base plate.

4. The system of any one of claims 1 to 3, wherein the loading area (56) comprises a counterpart on its upper surface for retracting the at least one element (7, 20).

5. The system of any one of claims 1 to 4, wherein the element (7, 20) is configured to retract when the tray (1) is placed onto a surface (30).

6. The system of any one of claims 1 or 5, wherein the element is
- a rocker (20) which is located below the upper surface of the base plate (2) and is connected through an axis of rotation to the tray wherein the rocker (20) comprises on one end a latch (7), or
- a spring loaded pin.

7. The system of any one of claims 1 to 6, comprising at least two elements (7, 20), wherein the at least two elements are arranged in a distance corresponding to a predefined length of a stack of racks.

8. The system of any one of claims 6 or 7, wherein the rocker (20) is spring loaded or the rocker's end opposite the end with the latch (7) comprises a weight (26).

9. The system of any one of claims 6 to 8, wherein the rocker's end opposite the end with the latch (7) comprises a stop (25) which is a perpendicular extending elongation of the rocker (20).

10. The system of any one of claims 6 to 9, wherein the tray (1) comprises two differently formed rockers. rockers (20).

11. The system of any one of claims 1 to 10, wherein the tray (1) comprises a C-shaped handle (9).

12. The system of any one of claims 1 to 11, wherein the guiding rail (10) comprises an end which is broader than the connecting part to the base plate.

13. The system according to claim 12, wherein the guiding rail (10) is T-shaped.

## Patentansprüche

1. Ein System, bestehend aus
- einer Schale (1) zum Laden und Entladen von Proben in ein System, wobei die Schale (1) eine Grundplatte (2) umfasst, die auf ihrer oberen Fläche eine sich in Längsrichtung erstreckende Führungsschiene (10) umfasst, die näher an einer der beiden Längsseiten (3) der Schale angeordnet ist, wobei die Schale (1) mindestens ein Element (7, 20) umfasst, das so konfiguriert ist, dass es sich durch eine Öffnung (11) in der oberen Fläche der Grundplatte erstreckt, wenn die Schale von einer Fläche (30) angehoben wird; und
- mindestens ein Gestell (5), das an seiner Unterseite einen Aufnahmeschlitz (6) aufweist, der für die Aufnahme einer Führungsschiene (10) des Tabletts konfiguriert ist; und
- einen Ladebereich (56) mit zwei Zahnriemen (55), die in einem der Breite der Schalen entsprechenden Abstand angeordnet sind.

2. Das System nach Anspruch 1, wobei die Führungsschiene (10) und der Aufnahmeschlitz (6) ein Ende aufweisen, das breiter ist als ihr Verbindungsteil zu einer Unterseite des Gestells (5) für den Aufnahmeschlitz (6) oder zur Oberseite der Grundplatte für die Führungsschiene (10).

3. Das System nach Anspruch 1 oder 2, wobei die Zahnriemen (55) in einer Höhe angeordnet sind, dass zwischen der mindestens einen Zahnstange (5) und der Oberseite der Bodenplatte des Tabletts ein Spalt (58) vorhanden ist.

4. Das System nach einem der Ansprüche 1 bis 3, wobei die Ladefläche (56) an ihrer Oberseite ein Gegenstück zum Zurückziehen des mindestens einen Elements (7, 20) aufweist.

5. Das System nach einem der Ansprüche 1 bis 4, wobei das Element (7, 20) so konfiguriert ist, dass es sich zurückzieht, wenn das Tablett (1) auf eine Oberfläche (30) gestellt wird.

6. Das System nach einem der Ansprüche 1 oder 5, wobei das Element
- eine Wippe (20) ist, die sich unterhalb der Oberseite der Grundplatte (2) befindet und über eine Drehachse mit dem Tablett verbunden ist, wobei die Wippe (20) an einem Ende einen Riegel (7) aufweist; oder
- ein gefederter Stift ist.

7. Das System nach einem der Ansprüche 1 bis 6, umfassend mindestens zwei Elemente (7, 20), wobei die mindestens zwei Elemente in einem Abstand angeordnet sind, der einer vordefinierten Länge eines Regalstapels entspricht.

8. Das System nach einem der Ansprüche 6 oder 7, wobei die Wippe (20) federbelastet ist oder das Ende der Wippe, das dem Ende mit dem Riegel (7) gegenüberliegt, ein Gewicht (26) aufweist.

9. Das System nach einem der Ansprüche 6 bis 8, wobei das Ende der Wippe, das dem Ende mit dem Riegel (7) gegenüberliegt, einen Anschlag (25) aufweist, der eine senkrecht verlaufende Verlängerung der Wippe (20) ist.

10. Das System nach einem der Ansprüche 6 bis 9, wobei das Tablett (1) zwei unterschiedlich geformte Wippen (20) aufweist.

11. Das System nach einem der Ansprüche 1 bis 10, wobei das Tablett (1) einen C-förmigen Griff (9) aufweist.

12. Das System nach einem der Ansprüche 1 bis 11, wobei die Führungsschiene (10) ein Ende aufweist, das breiter ist als der Verbindungsteil zur Grundplatte.

13. Das System nach Anspruch 12, wobei die Führungsschiene (10) T-förmig ist.

## Revendications

1. Un système comprenant
- un plateau (1) pour le chargement et le déchargement d'échantillons dans un système, dans lequel le plateau (1) comprend une plaque de base (2) comportant sur sa surface supérieure un rail de guidage longitudinal (10) qui est disposé plus près de l'un des deux côtés longitudinaux (3) du plateau, dans lequel le plateau (1) comprend au moins un élément (7, 20) qui est configuré pour s'étendre à travers une ouverture (11) dans la surface supérieure de la plaque de base, lorsque le plateau est soulevé à partir d'une surface (30) ; et
- au moins une crémaillère (5) comprenant sur sa surface inférieure une fente d'acceptation (6) configurée pour recevoir un rail de guidage (10) du plateau ; et
- une zone de chargement (56) comprenant deux bandes transporteuses dentées (55) disposées à une distance correspondant à la largeur des plateaux.

2. Le système de la revendication 1, dans lequel le rail de guidage (10) et la fente d'acceptation (6) comprennent une extrémité qui est plus large que sa partie de connexion à un côté inférieur de la crémaillère (5) pour la fente d'acceptation (6) ou à la surface supérieure de la plaque de base pour le rail de guidage (10).

3. Le système de la revendication 1 ou 2, dans lequel les bandes transporteuses dentées (55) sont disposées à une hauteur telle qu'un espace (58) est présent entre au moins une grille (5) et la surface supérieure de la plaque de base du plateau.

4. Le système de l'une des revendications 1 à 3, dans lequel la zone de chargement (56) comprend une contrepartie sur sa surface supérieure pour rétracter l'au moins un élément (7, 20).

5. Le système de l'une des revendications 1 à 4, dans lequel l'élément (7, 20) est configuré pour se rétracter lorsque le plateau (1) est placé sur une surface (30).

6. Le système de l'une des revendications 1 ou 5, dans lequel l'élément est
- une bascule (20) située sous la surface supérieure de la plaque de base (2) et reliée au plateau par un axe de rotation, la bascule (20) comportant à une extrémité un loquet (7) ; ou
- une goupille à ressort.

7. Le système de l'une des revendications 1 à 6, comprenant au moins deux éléments (7,20), dans lequel les deux éléments au moins sont disposés à une distance correspondant à une longueur prédéfinie d'une pile de rayonnages.

8. Le système de l'une des revendications 6 ou 7, dans lequel la bascule (20) est chargée par un ressort ou l'extrémité de la bascule opposée à l'extrémité avec le loquet (7) comprend un poids (26).

9. Le système de l'une des revendications 6 à 8, dans lequel l'extrémité de la bascule opposée à l'extrémité avec le loquet (7) comprend une butée (25) qui est une extension perpendiculaire de la bascule (20).

10. Le système de l'une des revendications 6 à 9, dans lequel le plateau (1) comprend deux bascules (20) de forme différente.

11. Le système de l'une des revendications 1 à 10, dans lequel le plateau (1) comprend une poignée en forme de C (9).

12. Le système de l'une des revendications 1 à 11, dans lequel le rail de guidage (10) comprend une extrémité plus large que la partie de connexion à la plaque de base.

13. Le système selon la revendication 12, dans lequel le rail de guidage (10) est en forme de T.
